(19) Europäisches Patentamt
European Patent Office
Office européen des brevets

(11) **EP 2 690 511 A1**

(12) **EUROPEAN PATENT APPLICATION**

(43) Date of publication:
**29.01.2014 Bulletin 2014/05**

(51) Int Cl.:
*G05B 13/04* $^{(2006.01)}$  *G06F 21/55* $^{(2013.01)}$
*H04L 29/06* $^{(2006.01)}$

(21) Application number: **12005375.6**

(22) Date of filing: **24.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ETH Zurich**
**8092 Zurich (CH)**

(72) Inventors:
• **Lygeros, Ioannis**
  **8044 Zürich (CH)**
• **Andersson, Göran**
  **8600 Dübendorf (CH)**
• **Vrakopoulou,Maria**
  **8006 Zürich (CH)**
• **Mohajerin Esfahani, Peyman**
  **8041 Zürich (CH)**

(54) **Apparatus and method for detecting an intrusion in electric power networks**

(57) In a method for detecting an intrusion in an electric power network, status signals are measured from the electric power network. A vector (Y(t)) of the measured status signals is supplied to a filter (1), a transfer function of which filter (1) is given by N(p)*L(p) with p representing a differential operator, wherein L(p) is a polynomial matrix in the differential operator p to be applied to the status signal vector (Y(t)), and N(p) is a polynomial vector in the differential operator p and represents a solution to equation N(p)*H(p)=0 wherein H(p) is a polynomial matrix in the differential operator p to be applied to internal status signals (x(t)) and/or to a load deviation pattern (d(t)) applied to a model of the electric power network. The filter (1) supplies an intrusion detection signal (r(t)) in response to applying the received status signal vector (Y(t)) to the filter (1). In a preferred approach, the filter is designed as insensitive as possible to load deviations.

FIG. 3

EP 2 690 511 A1

**Description**

Technical Field

The present idea pertains to the field of intrusion detection in electric power networks.

Background Art

Electric power networks, also denoted as power grids, are key for todays way of living in view of an ever increasing amount of electrical load to be served by those electric power networks.

With the advent of computational infrastructure for controlling electrical power networks including its generators etc., the generation and distribution of electricity in turn becomes more and more prone to defects in such IT infrastructure and/or to manipulation of such IT infrastructure. In the context of computing, an external manipulation of IT infrastructure is also denoted as intrusion. The art of detecting intrusions in computational resources and/or informational networks is denoted as intrusion detection.

Hence, it is desired to detect intrusions in electrical power networks including intrusions as a result of intrusion in the IT infrastructure of an electrical power network.

Disclosure of the Invention

This problem is solved by an apparatus for detecting an intrusion in an electric power network, and by a method for detecting an intrusion in an electric power network.

According to a first aspect of the present invention, an apparatus comprises a receiver for receiving a vector of status signals measured from the electric power network and a filter for providing an intrusion detection signal in response to applying the received status signal vector to the filter. A transfer function of which filter is given by N(p)*L(p) with p representing a differential operator, wherein L(p) is a polynomial matrix in the differential operator p to be applied to the status signal vector (Y(t)), and N(p) is a polynomial vector in the differential operator p representing a solution to equation N(p)*H(p)=0 wherein H(p) is a polynomial matrix in the differential operator p to be applied to internal status signals (x(t)) of a model of the electrical power network and/or to a load deviation pattern (d(t)) applied to a model of the electrical power network.

According to a second aspect of the present invention, a method is provided wherein status signals in the electric power network are measured and a vector of the measured status signals is applied to a filter. The filter supplies an intrusion detection signal in response to applying the received status signal vector to the filter. A transfer function of the filter is given by N(p)*L(p) with p representing a differential operator, wherein L(p) is a polynomial matrix in the differential operator p to be applied to the status signal vector (Y(t)), and N(p) is a polynomial vector in the differential operator p and represents a solution to equation N(p)*H(p)=0 wherein H(p) is a polynomial matrix in the differential operator p to be applied to internal status signals (x(t)) of a model of the electric power network and/or to a load deviation pattern (d(t)) applied to a model of the electrical power network.

In a preferred embodiment, the electric power network contains computational infrastructure for controlling actuators of the electric power network such as generators, switches, etc. In a specific embodiment a computational infrastructure is common for the electrical power network such that a central control may adjust the power output at different generators within a given area of the electrical power network. Such system is also known as Automatic Generation Control (AGC) since the power generation and distribution is automatically controlled without the intervention of a human being. Specifically in such system, the central control may be vulnerable to attacks / intrusion into the IT infrastructure.

In a preferred embodiment, the filter is online connected to sensors for measuring signals representative of the operation of the electrical power network, such as the measuring of a frequency of a turbine of a generator. Preferably, the vector of measured status signals represents signals or status information at a common point in time, or within a short period of time, such as within five minutes. In an embodiment, the filter may be located at the location of a central control unit representing the AGC, and may be embodied by a common computational infrastructure.

In a preferred embodiment, the intrusion detection signal is displayed on a display and/or triggers an optical or acoustic warning. The intrusion detection signal may also be used for triggering emergency routines such as powering down a generator, injecting a counter-signal balancing an intrusion signal, and/or shutting down the central control unit for preventing from further damages.

Other advantageous embodiments are listed in the dependent claims as well as in the description below.

Brief Description of the Drawings

The invention will be better understood and objects other than those set forth above will become apparent from the following detailed description thereof. Such description makes reference to the annexed drawings, wherein:

Figure 1, a sample topology of an electrical power network.
Figure 2, a block diagram of generators connected to a central control unit,
Figure 3, a sample intrusion detection signal as result of a method and/or an apparatus according to an embodiment of the present invention, and
Figure 4, a block diagram according to an embodiment of the present invention.

Modes for Carrying Out the Invention

An electrical power network according to an embodiment of the present invention may be understood as a network confined by a given geographical area. An electrical power network may include multiple generators for generating electrical energy. The generators are typically allocated in power plants spread across the area. Power lines also denoted as buses are provided between generators and between generators and consumers for transferring the generated electrical energy to a destination. In addition, there may be power lines between areas with different electrical power networks which lines are also denoted as tie lines. Those tie lines may be used for compensating a shortage of energy in one of the connected electrical power networks, or for any other balancing of power levels in the different networks.

In an embodiment, the generators for generating electrical energy are equipped with a frequency control. This means that a frequency of an electrical output of the generator is controllable. At the same time, the frequency of the electrical power signal supplied by the generator into the electrical power network represents a frequency of a turbine of the generator since it is a rotational motion of such turbine which generates the electrical power signal. A local control of the frequency may be applied, which is also denoted as primary frequency control, and which preferably may reside at the location of the generator or at the associate power plant. The primary frequency control may include monitoring a frequency output of each generator or a rotation frequency of the corresponding turbine. The frequency preferably can be adjusted in order to match a reference value, or in order to compensate for more or less power required in the network as a result of increased or decreased electrical load in the network. Hence, the local control unit may be adapted to preferably adapt a set-point in form of such reference value for the generator and is capable of controlling the frequency of the generator, preferably in a closed-loop-control, and as a result, is capable of controlling the frequency of the electrical power signal supplied into the power lines.

Preferably, multiple generators of an electrical network, e.g confined to a common area, are under a common control in addition to the local control. The common control includes a central control unit that is adapted to act on multiple individual generators spread across the electrical power network and mostly being arranged remote from the central control unit. Hence, in the present embodiment a central control unit may act on various generators in the network and control their frequency. Such central control unit may adjust the power output of the various generators at even different power plants in response to a generation-load mismatch in the electrical power network. Such concept is also denoted as Automatic Generation Control (AGC). In such embodiment, preferably a system frequency of the electrical power network is measured and is regulated in a closed-loop control to match a reference frequency or to compensate for generation-load mismatches in the network. The various generators of the electrical power network participating in the AGC represent actors of such closed-loop control. Subject to a deviation of the system frequency from the reference frequency, which deviation may be caused by an increase or decrease in load on the network, individual, multiple or all generators participating in the common closed-loop frequency control may be addressed for increasing or decreasing their individual power output. Such common closed-loop frequency control which is also denoted as secondary frequency control may be executed in parallel to the primary frequency control. A selection of which generators are addressed by the common frequency control may be made subject to a policy, for example, to provide equal wear amongst the generators such that always the generators with the least runtime may be preferred when an increased supply of more power is desired. Other criteria may, of course, be applied.

In addition to a control of the system frequency which may include a control of the frequency of the various individual generators participating in the common frequency control approach, a power exchange on tie lines between electrical power networks may be controlled, too, by such central control adjusting an exchange of energy between different electrical power networks. Preferably, the generators of an electrical power network and/or the power exchanged via tie lines is controlled in the common closed-loop control system to predefined fix or variable reference values which may represent the above mentioned set-points.

For determining a filter to be introduced later on, it is preferred to first model the behaviour of an electrical power network as follows:

It is assumed that the electrical power network comprises a number g of generators and a number n of non-generator nodes such as consumers. Each generator may be modelled as a constant voltage source behind a transient reactance x'$_d$. Therefore, for each generator a virtual node EG - also denoted as internal generator node - is added to represent the internal voltage source, resulting in a system representing the electrical power network of an area A with n+g buses.

Assuming that dynamics of a turbine associated with a generator i for generating electrical energy is represented by a first order transfer function, an oscillation of the subject generator i may be described in the time domain by:

$$\dot{\delta}_i = 2\pi(f_i - f_0) \qquad \text{equation (1)}$$

$$\dot{f}_i = \frac{f_0}{2H_i S_{B_i}}(P_{m_i} - P_{e_i} - \frac{1}{D_i}(f_i - f_0) - \Delta P_{Load_i}) \qquad \text{equation (2)}$$

$$\dot{P}_{m_i} = \frac{1}{T_{ch,i}}(P_{m_i}^0 + \Delta P_{p_i} + \Delta P_{agc} - P_{m_i}) \qquad \text{equation (3)}$$

wherein

- $\delta_i$ represents a rotor angle of a turbine of the generator in rad,
- f$_i$ represents a rotor electrical frequency in Hz,
- P$_{mi}$ represents a generated electrical power of the turbine as its output in MW,
- P$_{ei}$ represents an electrical power consumed by the load on the generator and the other loads of the electrical power network connected connected through to the generator, in MW,
- ΔP$_{Load}$ represents a deviation of the load from its initial value at the generator node in MW (),
- f$_0$ represents the initial rotor electrical frequency in a steady state in Hz, e.g. 50 Hz in Europe,
- H$_i$ represents the inertia time constant in sec, defined as a ratio between a rotational energy stored in the generator and a nominal power of the generator,
- S$_{Bi}$ represents the generators rated power in MW,, i.e. its nominal power,
- D$_i$ represents a frequency dependency of the load,
- T$_{ch,i}$ represents a time constant of the turbine in sec,
- P$_{mi}$$^0$ represents an initial set-point of the generator in MW,
- ΔP$_{pi}$ represents a deviation in power caused by the primary frequency control at the subject generator in MW,
- P$_{mi}$ is the generated power output of the turbine of the subject generator in MW,
- ΔP$_{agc}$ represents a deviation in power caused by the secondary frequency control at the subject generator in MW.

Equation (3) basically claims that a load deviation ΔP$_{Load}$ impacts the frequency f$_i$ according to equation (2) and as a result the power P$_{mi}$ generated by the turbine preferably compensates ΔP$_{pi}$ representing an in/decrease of power by means of a primary frequency control at the subject generator i, and ΔP$_{agc}$ representing an increase/decrease of power by means of a secondary primary frequency control by a central control unit including a frequency regulation at the subject generator and including a share of power imported /exported from/to other electrical networks via its tie lines. Hence, ΔP$_{agc}$ represents a power increase/decrease caused at the generator node by what is called the automatic generation control AGC or the secondary frequency control, which power increase/decrease is broken down to the individual nodes/generators.

However, P$_{ei}$ and P$_{agc}$ are related to dynamic states of the generator i via algebraic equations. Power flows in the electrical power network instead may preferably be expressed by means of voltages at given locations and by means of a bus admittance matrix of a network representing the electrical power network. Hence, within the above model description of the electrical power network it is desired to express the power flows as a function of the internal voltage E$_{Gi}$ of the subject internal node i, i.e. generator i. A vector EG comprising the generator internal node voltages of the electrical power network is built, wherein E$_{Gi}$ denotes the voltage at the i-th generator out of the set of g generators.

Here, it is assumed that $E_{Gi} = |E_{Gi}{}^0|$ at $\delta$ for all i=1,..., g wherein $\delta$ is a phase angle of the generator voltage which is assumed to coincide with the rotor angle $\delta$, and wherein $|E_{Gi}{}^0|$ is constant given that voltage control is not used. Hence, a power flow with respect to a generator node i may only depend on its phase angle $\delta$.

For any rest of nodes of the electrical power network excluding the generator internal nodes, voltages $V_{Ni}$ are included in a corresponding vector V. For removing the algebraic constraints for $P_{ei}$ and $P_{agc}$ the internal nodes of the generators are retained and any rest of the nodes is eliminated by assuming a constant impedance load for allowing the rest of nodes to be included in a network admittance matrix Y. In such approach, the nodes are partitioned by

$$I = \begin{bmatrix} I_G \\ I_N \end{bmatrix} = Y \begin{bmatrix} E_G \\ V_N \end{bmatrix} = \begin{bmatrix} Y_{GG} & Y_{GN} \\ Y_{NG} & Y_{NN} \end{bmatrix} \begin{bmatrix} E_G \\ V_N \end{bmatrix} \qquad \text{equation (4)}$$

wherein the bus admittance matrix Y includes transient reactances of the generators and admittances representing loads. Hence, the bus admittance matrix Y represents a topology of the electrical power network including reactances/ admittances of both of nodes, generators and non-generators. $E_G$ and $V_N$ represent the above voltage vectors, and $I_G$ and $I_N$ represent the associate injection current vectors. For resolving equation (4) it can be assumed that at the non power generating nodes V no current is injected, i.e. $I_N$=0. In this case, equation (4) can be resolved into

$$I_G = Y_G E_G \qquad \text{equation (4.1)}$$

$$V_N = K_V E_G + Y^{-1}{}_{NN} \qquad \text{equation (4.2)}$$

with

$$Y_G = Y_{GG} - Y_{GN} \; Y^{-1}{}_{NN} Y_{NG} \; \text{ and } \; K_V = -Y^{-1}{}_{NN} Y_{NG}$$

Equation (4) helps in determining the value $P_{ei}$ of power consumed in generator i since such power may be denoted as voltage $E_{Gi}$ of the subject node multiplied by the conjugate of the current on the buses / power lines to other generator nodes j to which the present generator node i is connected to. The current on the buses/power lines to the other generators j can be expressed by the voltage $E_{Gj}$ of these other nodes divided by the reactances of these other nodes j.

Hence, the power consumption per generator node i is determined by:

$$P_{ei} = \sum_{j=1}^{g} \left| E_{Gi}^0 \right| \left| E_{Gj}^0 \right| \left( B_{ij} \sin\left( \delta_i - \delta_j \right) + G_{ij} \cos\left( \delta_i - \delta_j \right) \right) \qquad \text{equation (5)}$$

wherein $B_{ij}$ and $G_{ij}$ are real and imaginary admittance values of the admittance matrix $Y_G$.

Hence, by equations (1),(2),(3) and (5), a generator node i is described by means of nonlinear differential equations.

An entire electrical power network confined to a given area may as such be described by a model comprising a set of nonlinear differential equations containing the differential equations for all generator nodes comprised in the electrical power network.

Whenever an intrusion is assumed, such intrusion may apply to the term $\Delta P_{agc}$ in the model for the reason that this term represents the power adjustment caused by the central control unit regulating, such that any intrusion into the central control unit by e.g. a virus or anything similar affecting the IT infrastructure of the central control unit may lead to convert equation (3) into

$$\dot{P}_{m_i} = \frac{1}{T_{ch,i}}(P_{m_i}^0 + \Delta P_{p_i} + (\Delta P_{agc} + U) - P_{m_i})$$   equation (3.1)

wherein U denotes an intrusion signal.

The above model of the electrical power network now including the intrusion signal U may be rewritten in a more compact form in the following ordinary state space description:

$$\dot{X}(t) = h(X(t)) + B_u u(t) + B_d d(t) + B_f f(t)$$

$$Y(t) = CX(t) + D_u u(t) + D_d d(t) + D_f f(t)$$   collectively equation (6)

wherein

- vector $X(t) := [\{\delta_i\}, \{f_i\}, \{P_{mi}\}, \Delta P_{agc}]$ represents internal states of the electrical power network containing turbine rotation angles $\delta_i$, electrical frequencies $f_i$ of the various generators i, generated power outputs of the turbine of the subject generator $P_{mi}$, and deviations in power caused by the secondary frequency control at the subject generator $\Delta P_{agc}$.
- $d(t) := \{\Delta P_{Load\,i}(t)\}$ represents an unknown load disturbance $\Delta P_{Load i}$,
- u(t) represents an input signal to the electrical power network, such as an excitation,
- f(t):=U represents a possible intrusion signal to be detected, and
- vector $Y(t) := [\{f_i\}, \{P_{mi}\}]'$ represents measured states of the system, and specifically electrical frequencies $f_i$ of the various generators i, and generated power outputs of the turbine of the subject generator $P_{mi}$ which states are measurable in the electrical power network at each generator,
- h(.)is a non-linear function representing the nonlinearities of the electrical power network.

The nonlinear function h(.) and the constant matrices $B_u$, $B_d$, $B_f$, C, $D_u$, $D_d$ and $D_f$ can be obtained by a mapping between coefficients of equations (1),(2),(3) and (5) for each node i on the one hand, to equation (6) on the other hand.
The equation (6) may be rewritten by applying a differential operator p which preferably is p=d/dt into a linear algebraic model of the electrical power network described by

$$H(p)x + L(p)z + F(p)f = 0$$   equation (7)

while for a non-linear model of the electrical power network a non-linear term E(x) as a function of an unknown signal x may be added to equation (7) such that a nonlinear model of the electrical power network may in general be described by

$$E(x) + H(p)x + L(p)z + F(p)f = 0$$   equation (8)

The signals x, z, f in the differential operator notation correspond to the signals of the ordinary state space description according to equation (6) as follows:

$$x := \begin{bmatrix} X - X_e \\ d \end{bmatrix}$$

$$z := \begin{bmatrix} Y \\ u \end{bmatrix}$$

$$\texttt{f:=f}$$

with $X_e$ denoting an equilibrium state of equation (3), e.g. an operating point or set-point. Therefore, in the differential operator notation, x represents typically unknown states, which collectively include not measurable states X of the electrical power network and load disturbances d, also denoted as load deviations or load deviation patterns as unknown external disturbances, while z collectively represents measurable states Y and known input states u of the electrical power network.

A simple mapping between the ordinary state space description of equation (6) and the description in the differential operator notation according to equation (8) leads to the following correspondences of matrices:

$$E(x) := \begin{bmatrix} h(x) - A(X - X_e) \\ 0 \end{bmatrix} \texttt{ wherein } A := \frac{dh}{dX} \bigg| X = X_e \texttt{ mapping (1.1)}$$

$$H(p) := \begin{bmatrix} -p + A & B_d \\ C & D_d \end{bmatrix} \qquad\qquad \texttt{mapping (1.2)}$$

$$L(p) := \begin{bmatrix} 0 & B_u \\ -I & D_u \end{bmatrix} \qquad\qquad \texttt{mapping (1.3)}$$

$$F(p) := \begin{bmatrix} B_f \\ D_f \end{bmatrix} \qquad\qquad \texttt{mapping (1.4)}$$

Whenever there is no known excitation of the system u(t)=0 such that u:=0 in the transform domain, $B_u$ and $D_u$ can be set to zero.

In a system without excitation, and assuming a linear system for the time being according to equation (7), the design for a filter for isolating intrusion attacks can be derived as follows:

The filter to be designed shall preferably isolate attacks from other non-attack scenarios, such as, e.g. power generation peaks caused by sudden changes in electrical load. Such filter may be described in the transform domain by a transfer function N(p)*L(p) since the filter will be supplied with signals/states z measured in the electrical power network.

It can further be derived that, when there is no attack i.e. f=0, equation (7) reads as

$$\texttt{H(p)x+L(p)z=0} \qquad\qquad \texttt{equation (7.1)}$$

Multiplying equation (7.1) by N(p) results in

$$H(p)N(p)x=-L(p)N(p)z \qquad \text{equation (7.2)}$$

Given that the right hand side of equation (7.2), i.e. L(P)N(p)z, represents an output r of the filter L(p)N(p) supplied with the measured signals z, such filter is desired to return at its output r for any z the value zero since it is assumed that no attack f=0 is applied to the electrical power network, such that the output r remains silent, i.e. zero in this case. Hence, the term on the left hand side of equation (7.2) shall be zero, too, in case of no attack, i.e. f=0:

$$N(p)H(p)=0 \qquad \text{condition (1)}$$

In case of an attack, however, $f \neq 0$ in equation (7). A multiplication of equation (7) by the polynomial vector N(p) reads as

$$N(p)H(p)x+N(p)L(p)z+N(p)F(p)f=0 \qquad \text{equation (7.3)}$$

wherein, again, the term N(P)L(p)z represents the filter output r, which output r in case of an attack $f \neq 0$ shall not be zero, such that

$$r = N(p)L(p)z = N(p)H(p)x + N(p)F(p)f \neq 0 \qquad \text{equation (7.4)}$$

This leads to condition

$$N(p)F(p) \neq 0 \qquad \text{condition (2)}$$

Given that except for the polynomial vector N(p) all the other polynomial matrices H(p), L(p) and F(p) are known, see mappings (1.1) - (1.4), one or more vectors N can be determined by means of solving the algebraic equations for condition (1). A vector N(p) that in addition fulfils condition (2) contributes to a set of x polynomial vectors

$$N_y(p) := [N_0(p),...,N_y(p),....,N_{x-1}(p)]$$

that fulfils conditions (1) and (2) wherein each of these polynomial vectors $N_y(p)$ may be applied for building the filter with the transfer function N(p)*L(p).

Hence, the filter only raises an alarm in its output r when an attack signal $f \neq 0$ is present and isolates other scenarios, i.e. non-attack scenarios, by not raising an alarm in its output r.

The filter also may be denoted as residual generator. For determining the transfer function of the residual generator the residual generator first is defined as a polynomial matrix, see conditions (1) and (2). The polynomial matrix may then preferably be translated into a linear programming framework, and as such is converted into a Linear Programming LP optimization problem. Linear programming is known to the skilled person as a technique for the optimization of linear functions dependent on given constraints. For the reason that the polynomial matrix now is converted into algebraic equations for which coefficients are searched for, the above differential operator p may now be replaced by variable s. After such conversion the vectors and matrices now read as:

$$\bar{N} := \begin{bmatrix} N_0 N_1 \dots\dots N_{d_N} \end{bmatrix}$$

$$\bar{H} := \begin{bmatrix} H_0 \dots & H_{d_H} \dots & 0 & 0 \\ 0 \dots & H_0 \dots & 0 & 0 \\ 0 \dots & \dots & H_{d_H} & \\ 0 \dots & \dots & H_{d_H-1} & H_{d_H} \end{bmatrix}$$

$$\bar{F} := \begin{bmatrix} F_0 \dots & F_{d_F} \dots & 0 & 0 \\ 0 \dots & F_0 \dots & 0 & 0 \\ 0 \dots & \dots & F_{dF} & \\ 0 \dots & \dots & F_{d_F-1} & F_{d_F} \end{bmatrix}$$

such that the conditions (1) and (2) may now equivalently be written as

$$\bar{N}\bar{H} = 0 \hspace{4cm} \text{condition (1.1)}$$

$$\left\| \bar{N}\bar{F} \right\|_\infty \ge 1 \hspace{4cm} \text{condition (2.1)}$$

Condition (2.1) refers to the infinite vector norm which means that in vector $\overline{NF}$ the absolute value of at least one of the vector elements shall be equal to 1 or shall exceed 1.

Conditions (1.1) and (2.1) can be resolved by computational tools.

In the following, the above approach is extended in a preferred embodiment to nonlinear models as is described by equation (8). As can be derived from equation (8), the nonlinearity is represented by term E(x) additive to the linear description of the model according to equation (7). Hence, the linear part of the system can be decoupled from its nonlinear part and can be treated separate according to the above description.

Multiplying equation (8) by N(p) and respecting that N(p)L(p)z represents the intrusion detection output r of the filter with filter transfer function R(p)=N(p)L(p) such that:

$$r := R(p)z = N(p)L(p)z = -(N(p)H(p)x + N(p)F(p)f + N(p)E(x))$$
$$= -d^{-1}(p)N(p)(F(p)f + E(x))$$

$$\hspace{6cm} \text{equation (8.1)}$$

wherein d(p) denotes a stable dynamic of sufficient order.

Therefore, in one embodiment, a main objective may be to reduce a contribution of the term E(x) in equation (8.1) thereby increasing the residual/filter output sensitivity with respect to an attack/intrusion f. Without loss of generality, a linear part of E(x) may be extracted and it may be assumed that

$$\lim_{x \to x_e} \frac{\|E(x)\|}{\|x - x_e\|} = 0$$

wherein $x_e$ is an equilibrium state of the system, and $\|\|$ stands for the Euclidean norm of a vector. Therefore, it may be assumed that a contribution of the nonlinear term $E(x)$ may be neglected provided that the system as modelled normally works around an equilibrium state $x_e$. From a practical perspective this may be a reasonable assumption since in many applications a system dynamic is considerably deviated from a nominal operating point in the presence of an attack signal.

Hence, according to this embodiment, the condition (2.1) can slightly be modified into

$$\max_{\bar{N}} \left\| \bar{N} \bar{F} \right\|_{\infty} \qquad \text{condition (2.2)}$$

while condition (1.1) may be transformed into

$$\text{subject to} \begin{cases} \bar{N} \bar{H} = 0 \\ \left\| \bar{N} \right\|_{\infty} \leq 1 \end{cases} \text{collectively condition}$$

(1.2)

and includes condition (1.1) and adds another optimization constraint which preferably is for avoiding unbounded solutions. Obviously this other constraint does not loose generality as the filter $R(p)$ in equation (8.1) can be computed up to a scalar. It is also a result that the other constraint in condition (1.2) is indeed an LP constraint in an augmented state space

Condition (2.2) means that in case there are multiple solutions $\overline{N}$ found for solving the linear programming framework according to condition (1.1), it is preferred to select that vector $\overline{N}$ as solution that shows the maximum absolute vector element value amongst all solution vectors N. The maximum absolute vector element denotes the element of a vector that shows the highest absolute value amongst all vector elements of said vector.

By doing so, a sensitivity of the filter with respect to attack events is increased, and in particular is maximized, since $\overline{N\,F}$ in condition (2.2) targets at a contribution of the attack signal f to the output r of the filter. Recall that $\overline{N\,F}$ represents the vector containing all nominator coefficients of a transfer function from the attack signal f to output signal r of the filter.

In a different embodiment, it is a sensitivity of the filter towards uncertainties, i.e. for example sudden load deviations in the electrical power network that is addressed rather than the sensitivity of the filter for attack signals being increased. The sensitivity with respect to uncertainties is preferred to be reduced or minimized. Uncertainties may encompass load deviations represented by $d(t)$ in the state space description of equation (6) or included in the differential operator notation x according to equation (8). Load deviation patterns, also denoted as disturbances patterns, may also occur suddenly and may have tremendous impact on the stability of the system.

In an embodiment, a model of the electrical power network which, for example, may be modelled according to the equation (8) may be exposed to load deviation patterns in the absence of attack signals f and in the absence of input signals u. Determined/measured signals/status denoted as z in equation (8) may represent a reaction of the simulated electrical power network to such stimuli in load deviation. These measured signals/states z which represent an excitation of the electrical power network model in response to the load deviation stimuli may then be supplied to the filter and the corresponding intrusion detection output r at the filter may be monitored.

An energy measure dependent on the output $r(t)$ may be taken as an indicator as to which polynomial vector $N(p)$ out of multiple polynomial vectors $N(p)$ as solution to condition (1), (1.1) or (1.2) shall be selected for designing the filter $N(p)*L(p)$.

Translating this approach into conditions for resolving the linear programming frame work according to condition (1.2), the conditions may in this embodiment be set to

$$\min_{\bar{N}} \left\| \bar{N} Q \bar{N} \right\|$$   condition (2.3)

with

$$Q := \tilde{D} G \tilde{D}^{`}$$

subject to. $\begin{cases} \bar{N}\bar{H} = 0 \\ \left\| \bar{N}\bar{F} \right\|_{\infty} \leq 1 \end{cases}$   collectively condition

(1.3)

This means that in case there are multiple different solutions N(p) found for solving the linear programming framework according to conditions (1.1) it is preferred to select the solution N(p) that shows the minimum scalar value as a result of a matrix multiplication of $\bar{N} Q \bar{N}'$.

In the present embodiment, in contrast to applying constraints to the nonlinear structure of system dynamics constraints are imposed on disturbance signals. It may be assumed that some rough information about disturbance patterns is available i.e. the disturbances may in one example be upfront restricted to a certain family of disturbances. In the present example, it is aimed at controlling a contribution of the nonlinear term E(x) according to equation (8) to the filter output r in the presence of these disturbances. In essence, the filter may be trained by these disturbances in order to identify the normal behaviour of the system while such disturbances appear.

For this purpose, a certain disturbance pattern t - which also was denoted so far as d(t) or $P_{Load}$-is assumed to result in signal x. A mapping of the disturbance pattern t into the nonlinearity E(x) shall be given by $t \rightarrow E(x(.))$ over a given time interval [0,T]. A corresponding approximation may be given by

$$e(t) := E(x(t)) \approx \sum_{i=0}^{n} \beta_i b_i(t) = \beta B(t) \text{ with } t \in [0,T]$$   equation (9)

wherein $\beta := [\beta_0 .... \beta_n]$ is a constant matrix, and $B := [b_0 ... b_n]$ is a vector of smooth functions, collectively also denoted as basis. For example, $[b_0 .... b_n]$ may be polynomials of different degree.

Further, it may be assumed that a subspace for the smooth functions is closed under differential operator p. This requirement, for instance, is satisfied for a polynomial or a Fourier basis. The aforementioned assumption may give rise to translate the linear operator p as a matrix operator i.e.

$$pB(t) := \frac{d}{dt} B(t) = DB(t)$$   equation (10)

In case $r_e(t) := N(p)e(t)$ defines an error output of the filter $r_e(t)$ owed to the nonlinearities of the system, which represents a contribution of the non-linear term, in accordance to the approximation in equation (9) and the operator in equation (10), and in view of the projection into the subspace, the error output $r_e(t)$ of the filter can also be approximated by:

$$r_e(t) \approx \bar{N} \tilde{D} B(t)$$   equation (11)

with

$$\tilde{D} := \begin{bmatrix} \beta \\ \beta D \\ .. \\ \beta D^{d_N} \end{bmatrix}$$

wherein $d_N$ is a degree of the filter. Hence, it is a second order norm $L_2$ of the error output signal $r_e$ may be formulated as a quadratic function of the filter coefficients $\bar{N}$ as follows:

$$\|r_e\|_{L2}^2 \approx \bar{N} \tilde{D} G \tilde{D}` \bar{N}` \qquad\qquad \text{equation (12)}$$

with

$$G_{ij} := \int_0^T b_{i-1} b_{j-1} dt.$$

wherein where the matrix $\bar{D}$ is defined as in equation (10). Once a basis B is determined for approximating the disturbance pattern, $\bar{D}$ is known and preferably is a differentiation matrix owed to the requirement for the basis as formulated in equation (10),
and preferably

$$D = \begin{bmatrix} 0 & 0 & .. & 0 \\ 1 & 0 & .. & 0 \\ .. & .. & .. & .. \\ 0 & .. & n & 0 \end{bmatrix}$$

G is dependent on the basis, too, preferably compensates for scaling of different members $[b_0....b_n]$ of the basis and is a symmetric matrix with dimension $(d_N + 1)$. Note that G may indeed be the Gram matrix $G_{ij} = \dfrac{T^{i+j-1}}{i+j-1}$ of the subspace N contained in a Hilbert space endowed with the inner product $\langle f, g \rangle := \int_0^T fg\,dt$. Hence, condition (2.3) can be resolved for one or more $\bar{N}$.

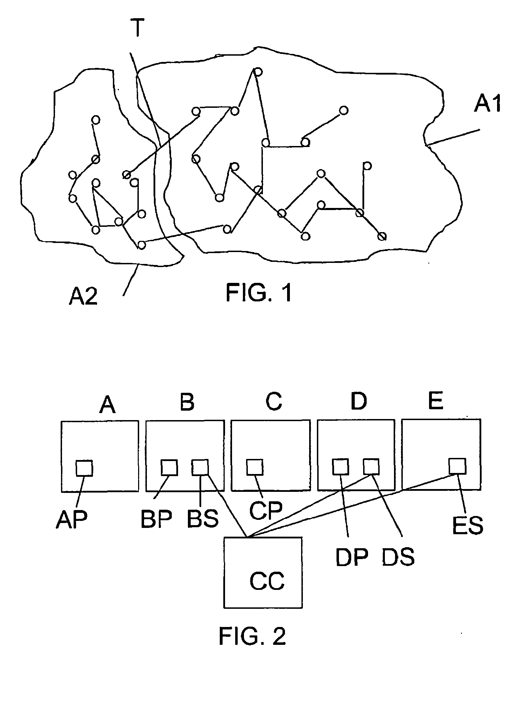

In Figure 1, an electrical power network is introduced according to an embodiment of the present invention. The sample network topology is illustrated wherein a first area A1 is covered by a first electrical power network and an adjacent second area A2 is covered by a different electrical power network. Each electrical power network includes multiple generators for generating electrical energy and consumers of the electrical energy. Generators and consumers are represented by dots in each area A1, A2. Power lines represented by lines in Figure 1 are provided between generators and between generators and consumers. Power lines between the two areas A1 and A2 are denoted as tie lines T.

In a sample embodiment, each area A1, A2 may be equipped with both primary and secondary frequency control. Let $G = \{i\}_1^g$ denote a set of generator indices, and A1={ i ∈ G ¦ i in area 1} and A2 ={ i ∈ G ¦ i in area 2} denote a set of generators that belongs to area A1 and area A2 respectively. Let also $L_{tie}$={(k,m)|k,m} be edges of a tie line and {k ∈ A1, m ∈ A2} wherein a tie line is a line connecting the two independently controlled areas. Then, a model of the two area power system may be described by the above general equations (1) and (2) for each generator in each area, and by:

$$\dot{P}_{m_{a1}} = \frac{1}{T_{ch,a1}}(P_{m1}^0 + \upsilon_{a1}\Delta P_{P_{a1}}{}^{sat} + \omega_{a1}\Delta P_{agc1}{}^{sat} - P_{m_{a1}}) \qquad \text{equation (3.2)}$$

$$\dot{P}_{m_{a2}} = \frac{1}{T_{ch,a2}}(P_{m1}^0 + \upsilon_{a2}\Delta P_{P_{a2}}{}^{sat} + \omega_{a2}\Delta P_{agc2}{}^{sat} - P_{m_{a2}}) \qquad \text{equation (3.3)}$$

Inside each area A1, A2 only some of the generators may be equipped with a primary frequency control. In Figure 2 a part of a network topology is illustrated including five generators A, B, C, D, and E, wherein except for generator E all generators are equipped with a local control, i.e. a primary frequency control AP, BP, CP, DP. Generator E may only be controllable centrally, i.e. by a secondary frequency control ES. On the other hand, only some of the generators may not be controllable by the central control unit, i.e. generators A and C, while the remaining generators B and D are controllable  by the central control unit CC, which is referred to as BS, DS. In reality, operators of these generators, respectively the associate power plants may have contracts that the generation utilities have established with the transmission system operator (TSO) of the area which transmission system operator controls the central control unit. To respect a topology in which not all generators may be equipped with a local control a binary vector $v$ is introduced in equations (3.2) and (3.3). To respect a topology in which not all generators may be centrally controllable a binary vector $\omega$ is introduced in equations (3.2) and (3.3).

Such primary frequency control may be activated independently and locally for each generator i with an objective to regulate the frequency by adjusting the generating power as described in the following equation (13):

$$\Delta P_{P_i} = -\frac{1}{S_i}(f_i - f_0) \qquad \text{equation (13)}$$

In equations (3.2) and (3.2) the secondary frequency (AGC) related control signals represented by $\Delta P_{agc}$ may, for the two areas A1, A2, be expressed by:

$$\Delta \dot{P}_{agc1} = \sum_{j \in A1} c_{1j}(f_j - f_0) + \sum_{j \in A1} b_{1j}(P_{mj} - P_{ej}(\delta) - \Delta P_{Loadj}) - \frac{1}{T_{n1}}g_{11}(\delta,f) - C_{P1}g_{12}(\delta,f)$$

$$- \frac{K_1}{T_{N1}}(\Delta P_{agc1} - \Delta P_{agc1}^{sat})$$

$$\Delta \dot{P}_{agc2} = \sum_{j \in A2} c_{2j}(f_j - f_0) + \sum_{j \in A2} b_{2j}(P_{mj} - P_{ej}(\delta) - \Delta P_{Loadj}) - \frac{1}{T_{n2}}g_{21}(\delta,f) - C2g_{22}(\delta,f)$$

$$- \frac{K_2}{T_{N2}}(\Delta P_{agc2} - \Delta P_{agc2}^{sat})$$

$$\text{collectively equation (14)}$$

Constants c and b are based on the weighted frequency measurement that the central control unit gets as an input. $T_n$, Cp and K are design constants for its control loop. In addition, saturation limits are applied as follows:

$$\Delta P_{p_i}^{sat} = \begin{cases} \Delta P_{p_i}^{\min} \; if \Delta P_{p_i} \le \Delta P_{p_i}^{\min} \\ \Delta P_{p_i} \; if \Delta P_{p_i}^{\min} < \Delta P_{p_i} \le \Delta P_{p_i}^{\max} \\ \Delta P_{p_i}^{\max} \; if \Delta P_{p_i} \ge \Delta P_{p_i}^{\max} \end{cases}$$

$$\Delta P_{agc_i}^{sat} = \begin{cases} \Delta P_{agc_i}^{\min} \; if \Delta P_{agc_i} \le \Delta P_{agc_i}^{\min} \\ \Delta P_{agc_i} \; if \Delta P_{agc_i}^{\min} < \Delta P_{agc_i} \le \Delta P_{agc_i}^{\max} \\ \Delta P_{agc_i}^{\max} \; if \Delta P_{agc_i} \ge \Delta P_{agc_i}^{\max} \end{cases}$$

Again, the network topology is reflected by:

$$P_{ei} = \sum_{j=1}^{g} |E_{Gi}| |E_{Gj}| \left( B_{ij} \sin(\delta_i - \delta_j) + G_{ij} \cos(\delta_i - \delta_j) \right)$$

$$g_{11}(\delta) = \Delta P_{T_{12}} = \sum_{(i,j)\in L_{tie}} P_{ij} - P_{t_{12}^0} \qquad g_{22}(\delta) = \Delta P_{T_{21}} = \sum_{(i,j)\in L_{tie}} P_{ji} - P_{t_{21}^0}$$

with

$$P_{ij} = |V_i| |V_j| \left( G_{ij} \cos(\delta_i - \delta_j) + B_{ij} \sin(\delta_i - \delta_j) \right)$$

$$g_{12}(\delta) = \Delta P_{T_{12}}$$

$$g_{21}(\delta, f) = \Delta P_{T_{12}}$$

The central control CC unit may utilize frequency measurements from its control area and power flow measurements on the tie lines so as to bring their values back to their operating set-points, i.e. $f_0$ for the frequency, and $\Delta P_{Tij}^0$ for the total active power exchange. This may be the closed-loop control implemented in the central control unit. The control signal/s to the actuators may be a centralized control signal that is distributed to some generators of the set of generators inside its control area.

Based on the above set of differential equations the electrical power network model can be enhanced to adding an undesired intrusion signal. Preferably, such intrusion signal is targeted at the central control unit including its infrastructure and associated informational network. In this sense, such intrusion signal U may be additive to the central control signal for centrally controlling the frequency of the generators participating. As a result, in case the attack occurs in area A1 which may result in a modification of equation (3.2):

$$\dot{P}_{m_{a1}} = \frac{1}{T_{ch,a1}} (P_{m1}^0 + \upsilon_{a1} \Delta P_{p_{a1}}^{sat} + \omega_{a1} (\Delta P_{agc1}^{sat} + U) - P_{m_{a1}}) \qquad \text{equation (3:3)}$$

The above model including the instrusion signal U may be rewritten in a more compact form in the following ordinary state space description:

$$\dot{X}(t) = h(X(t)) + B_d d(t) + B_f f(t)$$

$$Y(t) = CX(t) \qquad\qquad \text{collectively equation (6.1)}$$

see equation (6), however, with no excitation u(t)=0

Again $X := [\{\delta_i\}_1^g, \{f_i\}_1^g, \{P_{m,a1}\}_{a1 \in A1}, \{P_{m,a2}\}_{a1 \in A2}, \Delta P_{agc1}, \Delta P_{agc2}]^`$ represents internal states of the electrical power network including turbine rotation angles $\delta_i$ and electrical frequencies $f_i$ of the various generators i,

$d := \{\Delta P_{Load}(t)\}_1^g$ represents the unknown load disturbance,

f(t):=U, represents the intrusion signal to be detected, and $Y := [\{f_i\}_1^g, \{P_{m,a1}\}_{a1 \in A1}, \{P_{m,a2}\}_{a1 \in A1}]^`$ represents measured states of the system.

Such ordinary state space description again can be rewritten by using a differential operator p as is explained with respect to the general embodiment.

In a sample embodiment of a simulated network including two areas as introduced above, the electrcal network of the first area was exposed to a cyber attack on the AGC / central control unit, in the presence of load deviations $\Delta P_{Load}$ in all nodes.

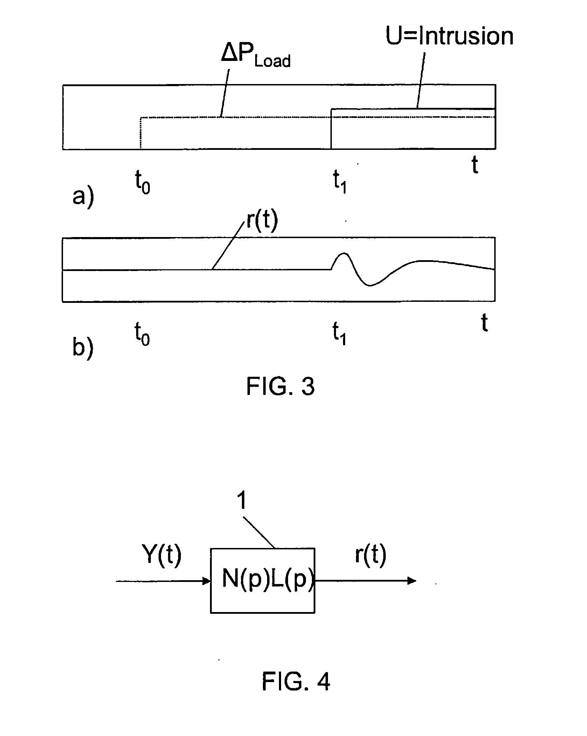

The filter designed according to the above teaching, has proven to be insensitive to a normal operation of the network including load deviations $\Delta P_{Load}$. On the other hand, the filter proves to be highly sensitive to any undesirable intrusion U in the AGC command. That is, as long as available measurements are consistent with the normal settings of the power network and small deviations are normally caused due to load deviations, the filter does not show anything on the monitor between to and $t_1$, i.e. the intrusion detection signal r(t) as shown in FIG. 3a) remains silent, i.e. ~0. However, once an intrusion signal U is injected to the AGC, the filter alarms within a very short time, see at $t_1$ in FIG. 3b).

In Figure 4, a block diagram of a filter 1 according to an embodiment of the present invention is shown which filter 1 is exposed to a signal status vector Y(t), and provides at its output the intrusion detection signal r(t):

Hence, a tractable approach to design a filter for nonlinear systems is introduced.

For details on the AGC modelling it is referred to P. M. Esfahani et al, "Cyber attack in a two-area power system: Impact identification using reachability", in American Control Conference, 2010, pp. 962 - 967 which is incorporated by reference.

## Claims

1. Apparatus for detecting an intrusion in an electric power network, comprising
   a receiver for receiving a vector (Y(t)) of status signals measured from the electric power network,
   a filter (1) for providing an intrusion detection signal (r(t)) in response to applying the received status signal vector (Y(t)) to the filter (1),
   a transfer function of which filter (1) is given by N(p)*L(p) with p representing a differential operator, wherein

   - L(p) is a polynomial matrix in the differential operator p to be applied to the status signal vector (Y(t)), and
   - N(p) is a polynomial vector in the differential operator p representing a solution to equation N(p)*H(p)=0 wherein H(p) is a polynomial matrix in the differential operator p to be applied to internal status signals (x(t)) of and/or to a load deviation pattern (d(t)) applied to a model of the electrical power network.

2. Apparatus according to claim 1,
   which apparatus is designed for detecting an intrusion in a common computational infrastructure for adjusting a power output at different generators within a given area of the electrical power network.

3. Apparatus according to claim 1 or claim 2,
   wherein in case of multiple polynomial vectors N(p) solving the equation, the polynomial vector N(p) selected for contributing to the filter transfer function is the polynomial vector N(p) that has a minimum scalar value as a result of a matrix multiplication of $\overline{N}Q\overline{N}$,
with Q being a matrix representing an accumulated impact of different simulated load deviation patterns ($\Delta P_{Load}$).

4.  Apparatus according to claim 3,
    wherein

$$Q := \tilde{D}G\tilde{D}`$$

$$\tilde{D} := \begin{bmatrix} \beta \\ \beta D \\ .. \\ \beta D^{d_N} \end{bmatrix}$$

$\beta := [\beta_0 .... \beta_n]$ is a constant matrix
D is a differentiation matrix,

and preferably $D = \begin{bmatrix} 0 & 0 & .. & 0 \\ 1 & 0 & .. & 0 \\ .. & .. & .. & .. \\ 0 & .. & n & 0 \end{bmatrix}$

G is a symmetric matrix, preferably with ele-*T* ments $G_{ij} := \int_0^T b_{i-1}b_{j-1}dt$, and preferably is a Gram matrix with

elements $G_{ij} = \dfrac{T^{i+j-1}}{i+j-1}$

$B := [b_0 .... b_n]$ is a vector of smooth functions, such that $\beta B(t)$ represents an approximation of a disturbance pattern applied to the electrical power network over a given time interval [0,T].

5.  Apparatus according to any one of the preceding claims,
    wherein in case of multiple polynomial vectors N(p) solving the equation, the polynomial vector N(p) selected for contributing to the filter transfer function is the polynomial vector N(p) that shows a lowest energy in the corresponding intrusion detection signal r(t) of a filter based on said polynomial vector N(p) when being supplied with the status signal vector (Y(t)) determined in the modelled electrical power network when being exposed to a simulated load deviation pattern ($\Delta P_{Load}$).

6.  Apparatus according to any one of the preceding claims,
    wherein the polynomial vector N(p) selected for contributing to the filter transfer function is the polynomial vector N(p) that shows a lowest energy in a combination of corresponding intrusion detection signals r(t) of a filter based on said polynomial vector N(p) when being supplied with the status signal vectors (Y(t)) determined in the modelled electrical power network when being exposed to different simulated load deviation patterns ($\Delta P_{Load}$).

7.  Apparatus according to claim 5 or claim 6,
    wherein the lowest energy is represented by a lowest Euclidian norm L2 of $\left\| r(t) \right\|_{L2}^2$ energy in the corresponding intrusion detection signal r(t).

8.  Electric power network, comprising
    generators for generating electrical power,

power lines for distributing the generated electrical power,
sensors for measuring status signals in the electric power network,
a common computational infrastructure for adjusting a power output at different generators, and
an apparatus according to any one of the preceding claims.

9. Method for detecting an intrusion in an electric power network, comprising
measuring status signals in the electric power network,
applying a vector (Y(t)) of the status signals measured to a filter (1), a transfer function of which filter (1) is given by N(p)*L(p) with p representing a differential operator, wherein

- L(p) is a polynomial matrix in the differential operator p to be applied to the status signal vector (Y(t)), and
- N(p) is a polynomial vector in the differential operator p and represents a solution to equation N(p)*H(p)=0 wherein H(p) is a polynomial matrix in the differential operator p to be applied to internal status signals (x(t)) and/or to a load deviation pattern (d(t)) applied to a model of the electric power network, and

the filter (1) supplying an intrusion detection signal (r(t)) in response to applying the received status signal vector (Y(t)) to the filter (1).

10. Method according to claim 9,
wherein the intrusion to be detected is an intrusion in a common computational infrastructure for adjusting a power output at different generators within a given area of the electrical power network.

11. Method according to claim 9 or claim 10,
wherein the model of the electrical power network is exposed to a simulated load deviation pattern ($\Delta P_{Load}$),
wherein a vector of status signals (Y(t)) is determined during applying the simulated load deviation pattern ($\Delta P_{Load}$) to the model,
wherein the measured status signal vector Y(t)) is supplied to different filters, each of the different filters being designed based on a different one of polynomial vectors N(p) representing a solution to the equation,
wherein the polynomial vector N(p) for contributing to the filter transfer function is selected out of the multiple polynomial vectors N(p) subject to the corresponding intrusion detection signals r(t) of the different filters.

12. Method according to claim 11,
wherein in case of multiple polynomial vectors N(p) solving the equation, the polynomial vector N(p) selected for contributing to the filter transfer function is the polynomial vector N(p) which corresponding filter shows the lowest energy in its intrusion detection signal r(t) upon supply of the determined status signal vector (Y(t)), and
in particular wherein the lowest energy in its intrusion detection signal r(t) is determined by a lowest Euclidian norm

L2 of $\left\| r \right\|_{L2}^{2}$ energy in its intrusion detection signal r(t).

13. Method according to any one of the preceding claims 9 to 12,
wherein the model of the electrical power network is exposed to different simulated load deviation patterns ($\Delta P_{Load}$),
wherein a vector of status signals (Y(t)) is determined during applying each simulated load deviation patterns ($\Delta P_{Load}$) to the model,
wherein the measured status signal vectors Y(t)) are supplied to different filters, each of the different filters being designed based on a different combination of polynomial vectors N(p) representing a solution to the equation, which combination includes one solution to the equation per simulated load deviation pattern, and
wherein the polynomial vector N(p) for contributing to the filter transfer function is determined by the filter with a minimum in energy in the corresponding intrusion detection signal r(t) amongst the different filters.

14. Method according to any one of the preceding claims 9 to 13,
wherein for determining the polynomial vector N(p) for contributing to the filter transfer function the filter is trained by applying different simulated load deviation patterns to the filter.

15. Computer program element comprising computer program code means for representing a filter as used in the apparatus of any one of the claims 1 to 7.

16. Computer program element comprising computer program code means for selecting the polynomial vector N(p) according to any one of the previous claims 9 to 13 when being executed on a processing unit.

FIG. 1

FIG. 2

$\Delta P_{Load}$

U=Intrusion

$t_0$   $t_1$   t

a)

r(t)

$t_0$   $t_1$   t

b)

FIG. 3

1

Y(t) → N(p)L(p) → r(t)

FIG. 4

EP 2 690 511 A1

EUROPEAN SEARCH REPORT

Application Number

EP 12 00 5375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HIDEAKI HASHIMOTO ET AL: "Distributed cyber attack detection for power network systems", DECISION AND CONTROL AND EUROPEAN CONTROL CONFERENCE (CDC-ECC), 2011 50TH IEEE CONFERENCE ON, IEEE, 12 December 2011 (2011-12-12), pages 5820-5824, XP032123381, DOI: 10.1109/CDC.2011.6161536 ISBN: 978-1-61284-800-6 * Abstract; equations (15), (16); section 5.1; figure 3.1 * | 1-3, 5-12,15, 16 | INV. G05B13/04 G06F21/55 H04L29/06 |
| Y | FRANK P M: "FAULT DIAGNOSIS IN DYNAMIC SYSTEMS USING ANALYTICAL AND KNOWLEDGE-BASED REDUNDANCY-A SURVEY AND SOME NEW RESULTS", AUTOMATICA, PERGAMON PRESS LTD., OXFORD, GB, vol. 26, no. 3, 1 May 1990 (1990-05-01), pages 459-474, XP008001193, ISSN: 0005-1088, DOI: 10.1016/0005-1098(90)90018-D | 1-3, 5-12,15, 16 | |
| A | * page 460, equations (1), (2); section 3.1; page 466; sections 5.3, 5.4, 5.5; figures 1-3 * | 4,13,14 | TECHNICAL FIELDS SEARCHED (IPC) G05B G06F H04L |

-/--

The present search report has been drawn up for all claims

| Place of search | Date of completion of the search | Examiner |
|---|---|---|
| Munich | 3 May 2013 | Tchegho Kamdem, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

21

| | Europäisches Patentamt / European Patent Office / Office européen des brevets | **EUROPEAN SEARCH REPORT** | Application Number<br>EP 12 00 5375 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SIMEU E ET AL: "Automatic design of optimal concurrent fault detector for linear analog systems", FAULT-TOLERANT COMPUTING, 1999. DIGEST OF PAPERS. TWENTY-NINTH ANNUAL INTERNATIONAL SYMPOSIUM ON MADISON, WI, USA 15-18 JUNE 1999, LOS ALAMITOS, CA, USA,IEEE COMPUT. SOC, US, 15 June 1999 (1999-06-15), pages 184-191, XP010343209, DOI: 10.1109/FTCS.1999.781049 ISBN: 978-0-7695-0213-7 | 1-3, 5-12,15, 16 | |
| A | * equations (1), (2); section 3.1; figure 1 * | 4,13,14 | |

-----

TECHNICAL FIELDS SEARCHED (IPC)

The present search report has been drawn up for all claims

| Place of search | Date of completion of the search | Examiner |
|---|---|---|
| Munich | 3 May 2013 | Tchegho Kamdem, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. M. ESFAHANI et al.** Cyber attack in a two-area power system: Impact identification using reachability. *American Control Conference,* 2010, 962-967